## Europäisches Patentamt

## European Patent Office

## Office européen des brevets

(19)

(11) Veröffentlichungsnummer: **0 294 559 B1**

(12)

# EUROPÄISCHE PATENTSCHRIFT

(45) Veröffentlichungstag der Patentschrift:
**27.12.90**

(21) Anmeldenummer: **88105789.7**

(22) Anmeldetag: **12.04.88**

(51) Int. Cl.⁵: **F16H 7/08**

(54) **Kettenspanner.**

(30) Priorität: **09.06.87  DE 3719163**

(43) Veröffentlichungstag der Anmeldung:
**14.12.88 Patentblatt 88/50**

(45) Bekanntmachung des Hinweises auf die Patenterteilung:
**27.12.90 Patentblatt 90/52**

(84) Benannte Vertragsstaaten:
**DE ES FR GB IT SE**

(56) Entgegenhaltungen:
**EP-A- 2 276 513**
**DE-A- 1 650 669**
**DE-A- 3 623 903**
**DE-A- 3 627 373**
**DE-U- 7 522 501**
**US-A- 2 963 918**

(73) Patentinhaber: **Dr.Ing.h.c. F. Porsche Aktiengesellschaft, Porschestrasse 42, D-7000 Stuttgart 40(DE)**

(72) Erfinder: **Ampferer, Herbert, Dipl.-Ing., Metternzimmerer Strasse 24, D-7123 Sachsenheim 2(DE)**

## Beschreibung

Die Erfindung bezieht sich auf einen Kettenspanner nach dem Oberbegriff des Patentanspruchs 1.

In dem DE-U 75 22 501 wird ein Kettenspanner mit einem Gehäuse beschrieben, das zwei ineinandergesetzte Kolben aufnimmt. Dem Kolben wird über eine Auffangwanne Öl zugeführt.

Aufgabe der Erfindung ist es, einen Kettenspanner zu schaffen, dessen Druckraum zwischen den Kolben auf einfache, aber sichere Weise mit Öl versorgt wird. Dabei sollte aber das Gehäuse dieser Kolben Vorkehrungen zur leichten Befestigung an einer Brennkraftmaschine aufweisen.

Erfindungsgemäß wird diese Aufgabe durch die kennzeichnenden Merkmale des Patentanspruchs 1 gelöst. Weitere, die Erfindung ausgestaltende Merkmale, sind in den Unteransprüchen enthalten.

Die mit der Erfindung hauptsächlich erzielten Vorteile sind darin zu sehen, daß sich das Gehäuse mit dem Befestigungsauge - und auch den Verlängerungen - einfach herstellen und mit der Schraube am Brennkraftmaschinen-Gehäuseteil leicht befestigen läßt. Darüber hinaus ist die Ölversorgung der beiden Kolben über die Schraube vorteilhaft, weil besondere externe Leitungen zum Gehäuse entfallen. Außerdem sichern die Führungen zwischen Gehäuse und Spannelementen, daß letztere auch unter hoher Beanspruchung in ihrer vorgesehenen Lage fixiert bleiben.

In der Zeichnung wird ein Ausführungsbeispiel der Erfindung gezeigt, das nachstehend näher beschrieben ist.

Es zeigt

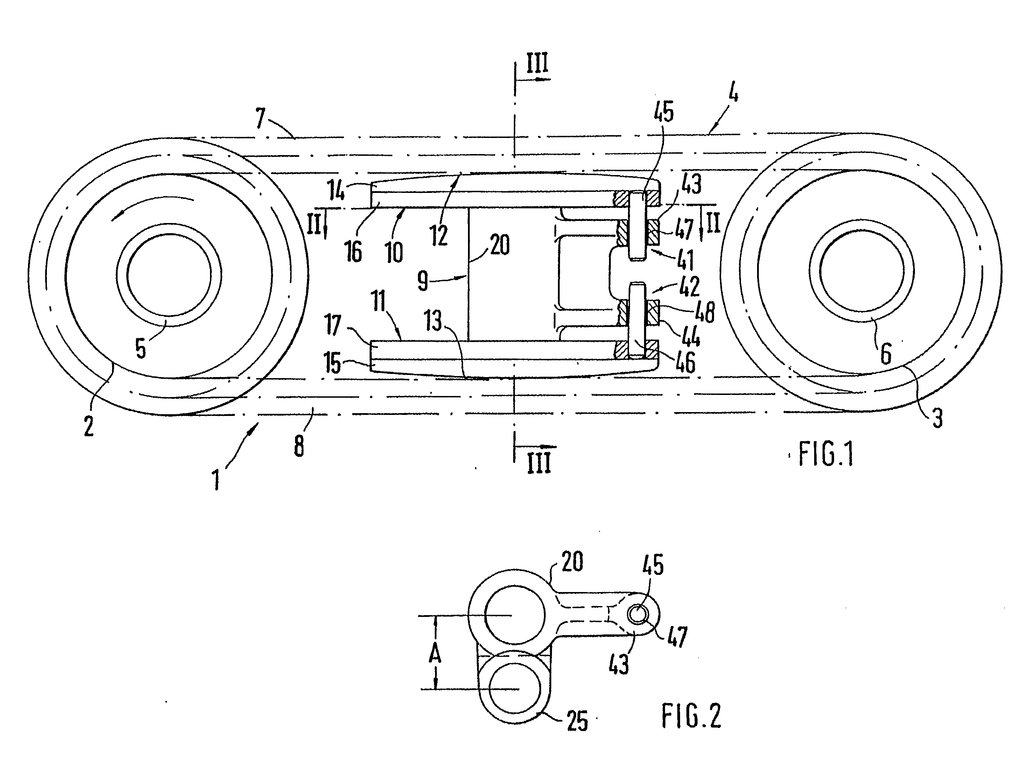

Fig. 1 eine schematische Darstellung eines Kettentriebs mit dem erfindungsgemäßen Kettenspanner,

Fig. 2 einen Schnitt nach der Linie II-II der Fig. 1,

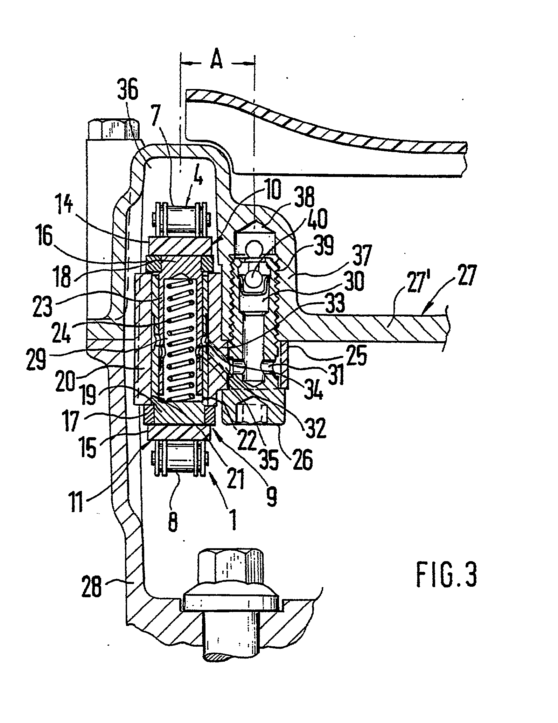

Fig. 3 einen Schnitt nach der Linie III-III der Fig. 1.

Der Kettenantrieb 1 umfasst zwei Kettenräder 2, 3, die mit einer Endlos-Kette 4 zusammenarbeiten und an parallelen obenliegenden Nockenwellen 5, 6 einer Brennkraftmaschine angebracht sind. Die Nockenwellen 5, 6 betätigen V-förmig und hängend angeordnete Ventile, wobei pro Zylinder zwei Einlaß- und zwei Auslaßventile vorgesehen sind, was nicht gezeigt ist.

Zwischen dem Lasttrum 7 und dem Lostrum 8 ist ein Kettenspanner 9 angeordnet, der auf das Lasttrum 7 und das Lostrum 8 wirkende Spannelemente 10, 11 aufweist. Die Spannelemente 10, 11 besitzen auf den dem Lasttrum 7 und dem Lostrum 8 zugekehrten Seiten mit Wölbungen 12, 13 versehene Kunststoffbeläge 14, 15, die an metallischen Tragplatten 16, 17 befestigt sind. Die Tragplatten 16, 17 sind mit Kolben 18, 19 fest verbunden, die etwa senkrecht zum Lasttrum 7 und zum Lostrum 8 ausgerichtet sind. Die Kolben 18, 19 sind ineinandergesetzt und relativbeweglich in einem zylindrischen Gehäuse 20 untergebracht, dergestalt, daß der Kolben 19 in einer Bohrung 21 des Gehäuses 20 und der Kolben 18 in einer Bohrung 22 des Kolbens 19 geführt ist; der Kolben 18 ist mit einer Bohrung 23 versehen. Eine Druckfeder 24 sucht die Kolben 18, 19 gegen das Lasttrum 7 bzw. Lostrum 8 zu spannen.

Das Gehäuse 20 ist mit einem Befestigungsauge 25 versehen, das achsparallel - Abstand A - zum Gehäuse 20 verläuft. Das Befestigungsauge 25 ist mittels einer Schraube 26 an einem Brennkraftmaschinen-Gehäuseteil 27 befestigt, das ein Deckel 27' ist, der auf einem Zylinderkopf 28 der Brennkraftmaschine ruht. Über die Schraube 26 und das Gehäuse 20 erfolgt die Ölversorgung in den gemeinsamen Druckraum 29 der Kolben 18, 19. Hierzu besitzt die Schraube 26 eine axiale Einbohrung 30 und eine diese kreuzende, weil querverlaufende Durchgangsbohrung 31. Die Durchgangsbohrung 31 ist benachbart einer Bohrung 32 angeordnet, die sich in einer Wand 33 zwischen dem Gehäuse 20 und dem Befestigungsauge 25 erstreckt. Die Bohrung 32 steht mit Druckraumbohrungen 34, 35 in den Kolben 18, 19 in Verbindung.

Der Deckel 27' umgibt mit einer Nische 36 bereichsweise die Endlos-Kette 4 und den Kettenspanner 9. Außerdem ist der Deckel 27' mit einer örtlichen Verdickung 37 versehen, die eine Ölzuführungsbohrung 38 und eine Gewindebohrung 39 umfasst. In die Gewindebohrung 39 ist die Schraube 26 eingedreht.

In der Ölzuführungsbohrung 38 ist ein Ventil 40 angeordnet, das den Rückfluß des Öls beispielsweise bei entsprechendem Druckniveau im Druckraum 29 sperrt. Das Ventil 40 ist im Ausführungsbeispiel in die Einbohrung 30 der Schraube 26 eingesetzt.

Zwischen dem Gehäuse 20 und den Spannelementen 10, 11 sind Führungsvorrichtungen 41, 42 vorgesehen. Die Führungsvorrichtungen 41, 42 werden einerseits durch seitliche Verlängerungen 43, 44 des Gehäuses 20 und andererseits durch Bolzen 45, 46 der Spannelemente 10, 11 gebildet, wobei die Bolzen 45, 46 relativbeweglich in Bohrungen 47, 48 der Verlängerungen 43, 44 angeordnet sind.

Schließlich sind das Gehäuse 20, das Befestigungsauge 25 und die Verlängerungen 43, 44 aus einem Stück hergestellt.

## Patentansprüche

1. Kettenspanner für eine Endlos-Kette, eines zwischen zwei parallelen Nockenwellen einer Brennkraftmaschine wirkenden Kettentriebs, wobei der Kettenspanner mit relativbeweglichen, an ineinandergesetzten, von einem Druckraum aus mit Öl beaufschlagbaren, in einem zylindrischen Gehäuse geführten Kolben vorgesehenen Spannelementen auf das Lasttrum und das Lostrum der Kette wirkt, dadurch gekennzeichnet, daß das Gehäuse (20) ein Befestigungsauge (25) umfasst, das im wesentlichen achsparallel zum Gehäuse (20) verläuft und mittels einer Schraube (26) an einem Brennkraftmaschinen-Gehäuseteil (27) befestigt ist und daß die Ölversorgung in den Druckraum der Kolben (18, 19) über Bohrungen in dem Brennkraftmaschinen-Gehäuseteil (27), der Schraube (26) und dem Gehäuse (20) erfolgt.

2. Kettenspanner nach Anspruch 1, dadurch gekennzeichnet, daß die Schraube (26) eine axiale Einbohrung (30) und eine zu dieser quer verlaufende Durchgangsbohrung (31) aufweist, wobei die Durchgangsbohrung (31) benachbart einer Bohrung (32) in einer Wand (33) zwischen Befestigungsauge (25) und Gehäuse (20) vorgesehen ist.

3. Kettenspanner nach Anspruch 1, dadurch gekennzeichnet, daß das Brennkraftmaschinen-Gehäuseteil (27) ein die Kette bereichsweise umgebender Deckel (27') ist.

4. Kettenspanner nach Anspruch 3, dadurch gekennzeichnet, daß der Deckel eine örtliche Verdickung (37) mit einer Gewindebohrung (39) umfasst, in die die Schraube (26) eingedreht ist.

5. Kettenspanner nach Anspruch 1, dadurch gekennzeichnet, daß zwischen dem Gehäuse (20) und den Spannelementen (10, 11) Führungsvorrichtungen (41, 42) vorgesehen sind.

6. Kettenspanner nach Anspruch 5, dadurch gekennzeichnet, daß die Führungsvorrichtungen (41, 42) vom Gehäuse (20) seitlich weggeführte Verlängerungen (43, 44) aufweisen, in denen achsparallel zum Gehäuse (20) verlaufende Bohrungen (47, 48) vorgesehen sind, in welche Bolzen (45, 46) der Spannelemente (10, 11) relativbeweglich angeordnet sind.

7. Kettenspanner nach Anspruch 6, dadurch gekennzeichnet, daß das Gehäuse (20), das Befestigungsauge (25) und die Verlängerungen (43, 44) aus einem Stück hergestellt sind.

8. Kettenspanner nach den Ansprüchen 1 und 2, dadurch gekennzeichnet, daß eine mit dem Kettenspanner (9) verbundene Ölzuführungsbohrung (38) ein Ventil (40) aufweist.

9. Kettenspanner nach Anspruch 8, dadurch gekennzeichnet, daß das Ventil (40) in die Einbohrung (30) der Schraube (26) eingesetzt ist.

## Claims

1. Chain adjuster for an endless chain of a chain drive acting between two parallel camshafts of an internal combustion engine, the chain adjuster acting on the loaded side and the slack side of the chain by means of relatively movable tensioning elements provided on pistons which are one inside the other, which may be acted upon by oil from a pressure area and which are guided in a cylindrical housing, characterized in that the housing (20) includes a securing eye (25) which runs substantially axially parallel with respect to the housing (20) and which is secured by means of a, screw (26) to an internal combustion engine housing part (27), and in that the oil supply to the pressure area of the pistons (18, 19) takes place via bores in the internal combustion engine housing part (27), the screw (26) and the housing (20).

2. Chain adjuster according to Claim 1, characterized in that the screw (26) has an axial internal bore (30) and, running transversely thereto, a through bore (31), with the through bore (31) being provided adjacent to a bore (32) in a wall (33) between the securing eye (25) and the housing (20).

3. Chain adjuster according to Claim 1, characterized in that the internal combustion engine housing part (27) is a cover (27') partially surrounding the chain.

4. Chain adjuster according to Claim 3, characterized in that the cover includes a localized thickening (37) with a threaded bore (39) into which the screw (26) is screwed.

5. Chain adjuster according to Claim 1, characterized in that guide apparatuses (41, 42) are provided between the housing (20) and the tensioning elements (10, 11).

6. Chain adjuster according to Claim 5, characterized in that the guide apparatuses (41, 42) have extensions (43, 44) which are guided laterally away from the housing (20) and in which there are provided bores (47, 48) running axially parallel with respect to the housing (20), pins (45, 46) of the tensioning elements (10, 11) being arranged relatively movablyin the bores (47, 48).

7. Chain adjuster according to Claim 6, characterized in that the housing (20), the securing eye (25) and the extensions (43, 44) are made in one piece.

8. Chain adjuster according to Claims 1 and 2, characterized in that an oil supply bore (38) connected to the chain adjuster (9) has a valve (40).

9. Chain adjuster according to Claim 8, characterized in that the valve (40) is inserted in the internal bore (30) of the screw (26).

## Revendications

1. Tendeur de chaîne pour une chaîne sans fin d'une transmission à chaîne agissant entre deux arbres à cames parallèles d'un moteur à combustion interne, le tendeur de chaîne agissant sur les brins supérieur et inférieur de la chaîne par des organes de tension comportant des pistons emboîtés l'un dans l'autre et actionnés par de l'huile en provenance d'une chambre de pression, les pistons étant montés déplaçables l'un par rapport à l'autre tout en étant guidés dans un boîtier cylindrique, caractérisé en ce que le boîtier (20) comprend un oeillet de fixation (25) qui s'étend essentiellement parallèlement à l'axe du boîtier (20), et est fixé par une vis (26), dans une partie de carter du moteur à combustion interne (27) l'alimentation en huile dans la chambre de pression des pistons (18 et 19) est assurée par des alésages dans la partie de carter (27) du moteur à combustion interne, dans la vis (26) et dans le boîtier (20).

2. Tendeur de chaîne selon la revendication 1, caractérisé en ce que la vis (26) comporte un alésage axial (30) et un alésage traversant (31) s'étendant perpendiculairement au premier, l'alésage traversant (31) étant prévu au voisinage d'un alésage (32) dans une paroi (33) entre l'oeillet de fixation (25) et le boîtier (20).

3. Tendeur de chaîne selon la revendication 1, caractérisé en ce que la partie de carter du moteur à combustion interne (27) est un capot (27') entourant localement la chaîne.

4. Tendeur de chaîne selon la revendication 3, caractérisé en ce que le capot comprend une patte (37) à plus grande épaisseur munie d'un alésage fileté (39) dans lequel est vissée la vis (26).

5. Tendeur de chaîne selon la revendication 1, caractérisé en ce qu'entre le boîtier (20) et les organes de tension (10, 11) sont prévus des dispositifs de guidage (41, 42).

6. Tendeur de chaîne selon la revendication 5, caractérisé en ce que les dispositifs de guidage (41, 42) comportent des saillies (43, 44) s'éloignant latéralement du boîtier (20), dans lesquelles sont prévus des alésages (47, 48) s'étendant parallèlement à l'axe du boîtier (20), dans lesquels sont placés de façon à pouvoir se déplacer l'un par rapport à l'autre, des boulons (45, 46) des organes de tension (10, 11).

7. Tendeur de chaîne selon la revendication 6, caractérisé en ce que le boîtier (20), l'oeillet de fixation (25) et les saillies (43, 44) sont fabriqués d'une seule pièce.

8. Tendeur de chaîne selon les revendications 1 et 2, caractérisé en ce qu'un des alésages d'amenée d'huile (38) relié au tendeur de chaîne (9) comporte une clapet (40).

9. Tendeur de chaîne selon la revendication 8, caractérisé en ce que le clapet (40) est disposé dans l'alésage intérieur (30) de la vis (26).

FIG.1

FIG.2

EP 0 294 559 B1

FIG.3